Europäisches Patentamt

European Patent Office

Office européen des brevets

(11) Numéro de publication : **0 169 128**
**B1**

(12) FASCICULE DE BREVET EUROPÉEN

(45) Date de publication du fascicule du brevet :
09.11.88

(51) Int. Cl.⁴ : **G 01 S   3/78**

(21) Numéro de dépôt : **85401297.8**

(22) Date de dépôt : **27.06.85**

(54) Système optoélectrique de détection et de localisation angulaire de sources lumineuses, à haute immunité envers les contre-mesures.

(30) Priorité : **13.07.84 FR 8411176**

(43) Date de publication de la demande :
**22.01.86 Bulletin 86/04**

(45) Mention de la délivrance du brevet :
**09.11.88 Bulletin 88/45**

(84) Etats contractants désignés :
**BE DE GB IT NL SE**

(56) Documents cités :
**EP-A- 0 004 227**
**US-A- 3 541 335**
**US-A- 3 743 390**

(73) Titulaire : **THOMSON-CSF**
**173, Boulevard Haussmann**
**F-75379 Paris Cedex 08 (FR)**

(72) Inventeur : **Couderc, Georges**
**Thomson-CSF SCPI 173, bld Haussmann**
**F-75379 Paris Cedex 08 (FR)**
Inventeur : **Pepin, Christian**
**Thomson-CSF SCPI 173, bld Haussmann**
**F-75379 Paris Cedex 08 (FR)**
Inventeur : **Symaniec, Leonid**
**Thomson-CSF SCPI 173, bld Haussmann**
**F-75379 Paris Cedex 08 (FR)**

(74) Mandataire : **Benoit, Monique et al**
**THOMSON-CSF SCPI 19, avenue de Messine**
**F-75008 Paris (FR)**

## Description

La présente invention concerne un système optoélectrique de détection et de localisation angulaire de sources lumineuses et qui présente une haute immunité aux contre-mesures et aux leurres.

L'invention s'applique avantageusement à la réalisation d'autodirecteurs infrarouges passifs devant équiper des missiles sol-air ou air-air. Elle sera envisagée dans ce qui suit dans ce contexte étant entendu qu'elle s'applique également à d'autres systèmes détecteurs optoélectriques, à des systèmes d'écartométrie et de guidage de missiles par exemple.

Les systèmes autodirecteurs infrarouges présentent un fonctionnement satisfaisant en présence d'une seule cible à détecter. Lorsqu'une deuxième cible ou source lumineuse se présente dans le champ observé, le système va normalement prendre en considération la tache la plus lumineuse. Celle-ci n'est pas forcément la bonne, notamment s'il s'agit d'une fausse cible, ou d'un leurre, émis ou largué par l'avion constituant la cible initialement visée. La technique de leurrage pour échapper au missile consiste à émettre une substance qui produit un rayonnement intense pour détourner ainsi l'attention du missile de la cible réelle moins rayonnante. Une autre technique consiste à équiper l'avion d'un brouilleur qui émet un rayonnement lumineux modulé dans les bandes infrarouges usuelles pour produire également le décrochage de l'autodirecteur.

Ainsi, en présence d'autres cibles, réelles ou produites artificiellement en vue de brouillage ; l'autodirecteur ne peut plus répondre normalement et continuer de poursuivre la cible visée.

Un but principal de la présente invention est de perfectionner ces systèmes optoélectriques de détection et de localisation pour lui permettre de discriminer plusieurs cibles présentes dans le champ d'observation et préserver le fonctionnement optimal désiré selon le cas de figure présenté. Ce pouvoir de discrimination confère, en conséquence, au système, une immunité élevée contre les leurres et les brouilleurs.

Dans ces systèmes, le rayonnement reçu est modulé avant de parvenir au détecteur, à l'aide d'un cache mobile composé de fentes transparentes sur fond opaque qui sont déplacées pour créer, par interruption du faisceau lumineux, une modulation temporelle déterminée. Le cache est appelé aussi dispositif à grilles de modulation, ou encore réticule (de la terminologie anglo-saxonne). Les dimensions des grilles sont déterminées en relation avec celles de l'image utile de l'objet à détecter pour produire un filtrage spatial destiné à l'élimination des sources parasites étendues.

Le dispositif à grilles est généralement réalisé sous forme d'un disque porteur de pistes optiques codées et entraîné en rotation uniforme. Il en existe différentes formes de réalisation. L'ensemble grilles-dispositif détecteur permet de définir le procédé d'extraction des données d'écartométrie par traitement des signaux détectés, par filtrage adapté ou corrélation.

Pour des applications à des systèmes passifs de poursuite infrarouge du type autodirecteurs, les impératifs sévères de tenue mécanique, de compacité et de légèreté imposent une réalisation du disque modulateur sous de faibles dimensions. Les grilles se présentent alors assez souvent sous forme de secteurs transparents et opaques alternés, le disque étant centré sur l'axe optique. Ces solutions permettent une mesure aisée de l'argument de l'image de la cible mais pour obtenir le module, des moyens complémentaires s'avèrent nécessaires. Suivant certaines solutions, ceci est réalisé en modifiant le dessin des grilles, ou en l'interrompant partiellement. Une autre solution fréquente sur des systèmes semi-actifs laser, consiste à utiliser un dispositif détecteur à quatre quadrants et quatre voies de réception pour le traitement et l'écartométrie des signaux laser détectés ; cette solution procure une mesure fine, continue, linéaire dans une plage d'écart déterminée du champ observé.

Le brevet français 2 420 144 décrit un système passif de détection optoélectrique et de localisation qui combine à la fois des grilles de modulation et un détecteur à quatre quadrants pour séparer le filtrage spatial et la modulation de l'écartométrie. Ce système comporte successivement : une optique de réception et de focalisation du rayonnement utile provenant du champ observé, un disque tournant autour de l'axe optique de l'objectif et porteur de grilles de filtrage spatial disposées dans le plan focal de l'objectif, les grilles étant formées de secteurs transparents et opaques alternés produisant une fréquence de modulation, une optique intermédiaire de transposition d'images, un dispositif photo-détecteur du type à quatre quadrants, et des circuits de traitement et d'écartométrie des quatre voies de réception pour démoduler les signaux détectés et élaborer les signaux d'écart représentatifs de dépointage angulaire de l'objet par rapport à l'axe optique de visée.

Ce montage présente toutefois l'inconvénient déjà signalé, de ne pouvoir discriminer plusieurs cibles à la fois présentes dans le champ optique. Le système poursuit alors la cible de plus grande intensité ou bien, il élabore une mesure d'écarts angulaires correspondant à un barycentre énergétique de l'ensemble des cibles, ce qui entraîne des perturbations ou la perte de l'objectif poursuivi lorsque celui-ci émet ou largue des leurres optiques. L'autre inconvénient qui en résulte est la sensibilité aux brouillages optiques. Les brouilleurs portés par les cibles sont déterminés pour émettre un rayonnement lumineux couvrant les bandes usuelles d'exploitation en infrarouge en sorte que l'autodirecteur perd la poursuite et décroche. Un autre inconvénient de ce système est que les mesures d'écart doivent être corrigées en fonction du roulis si le missile n'est pas stabilisé en roulis.

Suivant l'invention, il est proposé de réaliser un système de détection et de localisation de ce type aménagé pour remédier aux limitations et aux défauts de fonctionnement précités. A cet effet le dispositif à grilles de modulation traduit un code de type approprié pour être identifié aisément par corrélation, de préférence un code du type pseudo-aléatoire qui présente un pic de corrélation de grande amplitude et une absence de lobes secondaires. La modulation optique ainsi créée par la rotation des grilles est démodulée ensuite dans les circuits de traitement en utilisant des corrélateurs pour évaluer ensuite le module $\rho$ de chacune des sources détectées, ce paramètre étant indépendant du roulis du missile. L'autre coordonnée polaire constituée par l'argument $\theta$ de chaque source est définie temporellement par la position du pic de corrélation vis-à-vis d'une référence temporelle de mesure et comme on le verra cette valeur n'a pas besoin d'être mesurée ; elle est déterminée par l'ensemble des grilles et des corrélateurs et par un calage angulaire préliminaire de la grille autour de l'axe optique.

Dans les systèmes autodirecteurs, la direction de l'axe optique de l'objectif récepteur qui constitue la direction de visée du système, est généralement stabilisée par effet gyroscopique. La partie tournante du gyroscope appelé rotor, ou toupie, entraîne les grilles de modulation qui sont placées dans le plan focal de l'optique réceptrice. Cette dernière est généralement réalisée sous forme d'un ensemble Cassegrain dont le miroir principal est monté mécaniquement avec un aimant pour constituer le rotor. La toupie est reliée au reste de l'autodirecteur par l'intermédiaire d'un montage mécanique du type à deux degrés de liberté ou montage cardan. Le flux optique modulé par les grilles est capté par le détecteur qui est supporté par le cardan et non entraîné en rotation, ou bien ce détecteur optique peut être solidaire du corps de l'autodirecteur. Un traitement électronique permet d'élaborer les ordres de commande afin d'orienter l'axe optique du gyroscope vers la cible poursuivie. Cette commande s'effectue grâce à des bobines dites de précession.

Tout en conservant le principe de la boucle d'asservissement qui alimente les bobines de précession pour effectuer le rattrapage d'écart, le système selon l'invention utilise une grille de modulation particulière codée, et un dispositif détecteur à quatre quadrants ou à deux éléments selon une autre version comme on le verra ultérieurement pour permettre avec un traitement électronique de discriminer deux ou plusieurs cibles, dont l'intensité peut être différente et effectuer le choix de la cible utile en éliminant des leurres. Le système permet également une grande résistance aux brouilleurs modulés portés par une cible. Ainsi qu'on le verra dans la description, les écarts sont toujours sous forme de coordonnées polaires $\rho$ et $\theta$, la nouvelle grille permet d'extraire la coordonnée $\theta$ et l'ensemble des détecteurs la coordonnée $\rho$. Ces deux paramètres ne sont plus fournis par le même moyen comme dans le système antérieur cité précédemment et l'on peut discriminer plusieurs cibles.

Les particularités de l'invention apparaîtront plus distinctement au cours de la description qui suit donnée à titre d'exemple à l'aide des figures annexées qui représentent :

la figure 1, un diagramme général d'un système de détection et de localisation conforme à l'invention ;

la figure 2, un schéma d'un dispositif détecteur à quatre quadrants utilisé selon un premier mode de réalisation ;

la figure 3, un schéma de réalisation d'un disque porteur de grilles traduisant un code pseudo-aléatoire ;

la figure 4, un exemple de réalisation d'un autodirecteur correspondant au système selon l'invention ;

la figure 5, un diagramme des circuits électroniques utilisés ;

la figure 6, des formes d'ondes relatives au fonctionnement ;

la figure 7, un schéma partiel relatif à un autre mode de réalisation utilisant deux détecteurs concentriques ;

la figure 8, des courbes relatives au calcul du module dans un système selon la figure 7 ;

la figure 9, un schéma partiel relatif à une variante de réalisation du système selon la figure 7.

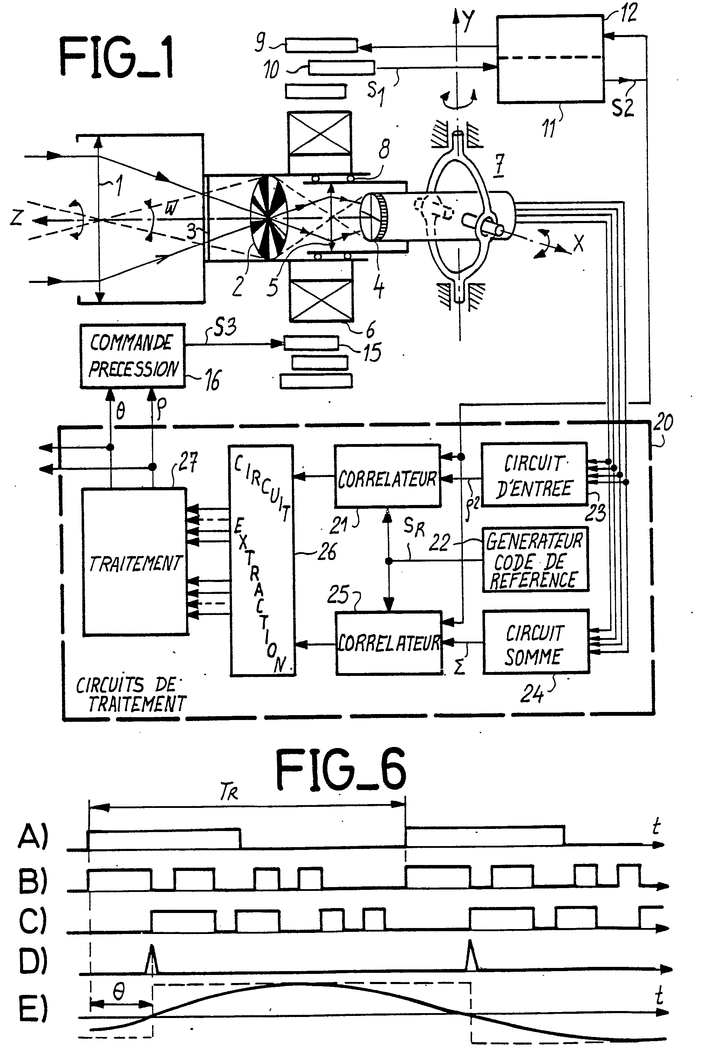

Sur le diagramme figure 1 se trouvent reportés les éléments essentiels de la combinaison formant le système de détection et de localisation. Ces éléments comprennent : un objectif optique de réception 1 symbolisé par une lentille et qui assure la focalisation du rayonnement reçu dans le champ d'observation d'ouverture w et centré sur l'axe optique Z, un dispositif de balayage à grilles 2 situé dans le plan focal correspondant et produisant les fonctions filtrage spatial et modulation, un film optique 3 (ou un traitement approprié sur un dioptre de l'optique 1) interposé sur le trajet optique pour sélectionner le rayonnement utile inclus dans la bande de longueurs d'ondes exploitée, et un dispositif détecteur photoélectrique 4 disposé à distance du plan des grilles en aval d'un objectif optique intermédiaire 5. Celui-ci transpose l'image du champ au niveau d'un plan voisin de celui de détection de manière à former d'une source ponctuelle, une tâche lumineuse d'un certain diamètre sur ce plan et ayant une répartition de la densité lumineuse permettant d'optimiser la pesée énergétique entre les quadrants faite ensuite par le traitement électronique.

Le dispositif d'entraînement des grilles 2 est constitué de préférence par la toupie ou rotor 6 d'un ensemble gyroscopique dont les autres éléments comportent : un montage cardan 7 permettant des rotations autour des deux axes perpendiculaires X, Y, ces axes étant également perpendiculaires à l'axe optique Z ; un découplage mécanique 8 symbolisé par des roulements entre la partie tournante et le cardan ; des bobines 9 constituant un stator. Le rotor 6 peut être un aimant. Dans l'exemple représenté l'optique réceptrice est également entraînée par le rotor 6 ; l'optique intermédiaire 5, ou adaptatrice, ainsi que le détecteur 4 sont solidaires directement du cardan 7.

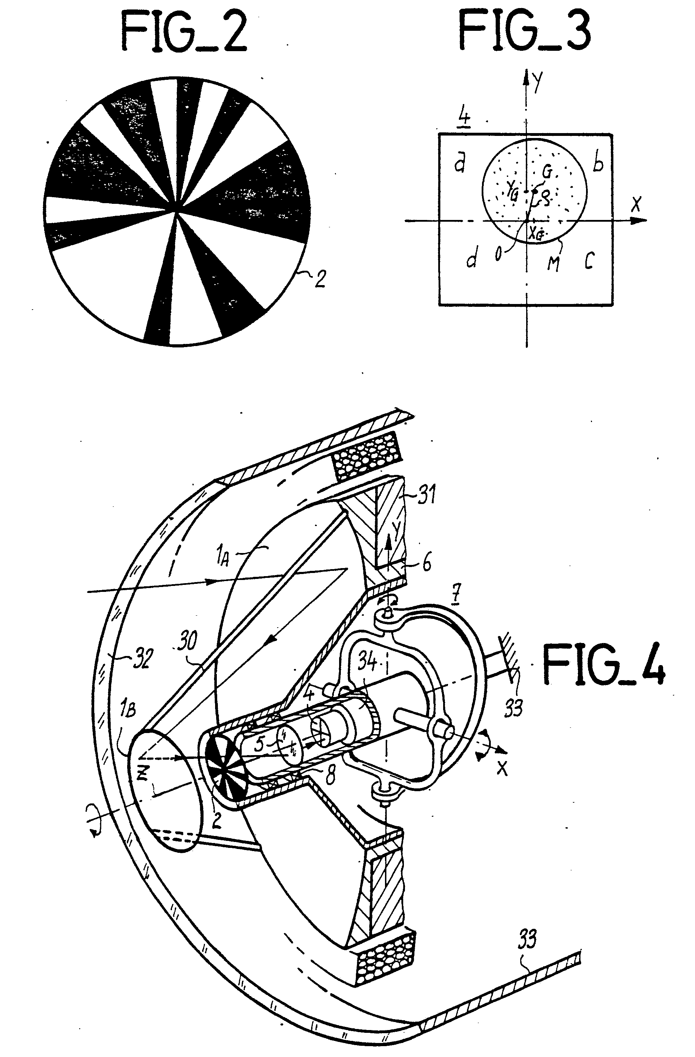

Les grilles peuvent être constituées de secteurs opaques et transparents alternés, déplacés par rotation du disque correspondant centré sur l'axe Z pour obtenir une réalisation compacte exploitable sur autodirecteur. La figure 2 en montre une réalisation correspondant à un code pseudo-aléatoire de 31 moments. L'ensemble gyroscopique est construit de façon que l'axe de rotation passe par le centre de la grille 2.

Le disque 2 est entraîné à vitesse uniforme. Pour contrôler et stabiliser la vitesse, le montage gyroscopique comporte d'autres bobines 10 jouant le rôle de capteur pour produire un signal S1 dont la période est celle de rotation de la toupie et dont la phase définit une référence temporelle de mesure. Ce signal S1 est dû au flux magnétique alternatif créé par le passage périodique de l'axe Nord-Sud de l'aimant 6. On se rend bien compte que la phase 0 de ce signal S1 correspond à une position bien définie de l'axe Nord-Sud et donc du rotor autour de l'axe Z par rapport à un système d'axes lié au corps du missile. Le signal S1 est traité dans un circuit 11 pour produire les signaux S2 d'horloge et de référence utiles d'une part, pour stabiliser la rotation par l'intermédiaire du circuit 12 qui alimente le stator, d'autre part, pour le fonctionnement de la démodulation. Le signal de référence de mesure est symbolisé par des créneaux sur la figure 6 A, à la période TR de rotation ; les signaux d'horloge sont constitués de créneaux de période TR et multiple kTR. Ces techniques d'asservissement de la rotation sont connues et non détaillées ici.

L'axe de visée Z est stabilisé par effet gyroscopique et est pointé en direction de la cible utile en agissant sur des bobines de précession 15 disposées axialement. A cet effet le signal S3 qui alimente les bobines 15 doit avoir une amplitude en relation avec l'écart du point cible par rapport à l'axe optique, c'est-à-dire avec le module ρ de la cible. De plus, sa place ne doit pas être quelconque mais telle que le déplacement de l'axe Z se fasse dans la bonne direction et correspond donc bien à l'argument θ de la cible. Le circuit 16 élabore les signaux d'alimentation S3 à partir des données ρ et θ correspondantes délivrées par le circuit de traitement 20.

Le dispositif détecteur 4 qui alimente les circuits 20 est avantageusement du type détecteur à quatre quadrants pour faire des mesures d'écart. En se reportant à la figure 3, les quadrants sont désignés a, b, c, d et l'on considère que la tache image M produite par l'optique 5 est circulaire avec une répartition de densité optimisée. Si le centre G de l'image M est au centre O correspondant à l'axe Z, les énergies détectées sont égales et les écarts nuls. Pour un dépointage quelconque représenté on a les relations :

$$X_G = A - B \text{ et } YG = A + B,$$

avec A = a — c et B = b — d (différences entre les signaux des voies a et c, b et d respectivement) d'où : $\rho = \sqrt{2} \sqrt{A^2 + B^2}$ représentant le module OG. L'argument est donné par l'angle entre OG et la direction de référence précédemment citée qui correspond à la référence temporelle de mesure. Pour assurer la cohérence nécessaire entre la phase du signal de précession S3 et la phase du signal de modulation, on procède à un calage angulaire préalable du disque 2 autour de l'axe Z. Lorsque le disque est correctement calé angulairement vis-à-vis de la direction de référence de l'axe Nord-Sud de l'aimant on a réalisé la concordance de phase entre la modulation des grilles et la précession S3 pour n'importe quelle valeur d'argument θ par rapport à cette direction liée aux axes de référence de l'autodirecteur. En toute rigueur, le calage du disque sera ajusté pour compenser en outre, le retard électrique introduit par les circuits de traitement 20 et le circuit de boucle 16.

La figure 4, montre un exemple de réalisation de la partie opto-mécanique du système selon la figure 1 appliqué à un autodirecteur. L'optique 1 est un montage Cassegrain avec miroir principal 1A porté par la toupie 6 et miroir secondaire 1B relié par des bras 30 à la toupie. On distingue un aimant annulaire 31. L'ensemble est placé sous un Irdôme 32 en extrémité du corps 33 de missile auquel est fixée la suspension à la cardan 7. Le détecteur 4 peut être associé à un dispositif de refroidissement 34.

Les circuits de traitement 20 (Fig. 1) peuvent être décomposés en éléments principaux comprenant, un premier circuit de corrélation 21 pour corréler un signal représentant le module ρ, plus précisément son carré, avec un code de référence SR donné par un circuit 22. La valeur ρ² est produite dans un circuit d'entrée 23 à partir des différentes voies détectées. Ces voies sont transmises à une voie somme 24 suivie de même par un deuxième circuit de corrélation 25 qui reçoit le code de référence SR. La voie somme sert à produire ensuite la mesure d'écart ρ. Les corrélateurs sont synchronisés par un signal d'horloge S2 de période TR, ou multiple de TR. Les sorties de corrélation sont transmises à un circuit d'extraction des pics de corrélation 26. Dans le cas de plusieurs cibles détectées ayant des arguments $\theta_1, \theta_2, \ldots, \theta_n$ différents on obtient des valeurs de pics $\rho_1, \rho_2, \ldots, \rho_n$ et les sommes correspondantes $\Sigma_1, \Sigma_2, \ldots, \Sigma_n$ en sortie. Ces données sont transmises à une unité finale de traitement 27 qui effectue : le calcul des modules correspondants pondérés : $\rho = \sqrt{2} \sqrt{A^2 + B^2/\Sigma}$ et divers traitements comprenant l'élaboration d'une commande automatique de gain, des prédictions d'écarts, la sélection de cible en fonction notamment des prédictions d'écart, la transmission des données de cibles ρ et θ sélectionnées vers le circuit de commande 16 des bobines de précession et vers d'autres circuits non figurés servant à contrôler la navigation du missile.

En fait, dans le système selon l'invention seul le module ρ pondéré est effectivement mesuré en 27 et transmis pour assurer l'amplitude de précession correspondante. L'argument θ n'est pas mesuré ; dans les conditions de calage précitées du disque, il est intrinsèquement défini par l'instant d'apparition du pic de corrélation correspondant et c'est cette information temporelle qui est transmise au circuit 16. Ceci est mis en évidence à l'aide de la figure 6 qui montre un code (Fig. 6-B) correspondant à une valeur nulle d'argument, c'est-à-dire la cible présentant une direction OG (Fig. 3) correspondant avec celle de référence de l'aimant et du disque ; dans ce cas le pic de corrélation coïncide avec le signal de référence (Fig. 6-A). Dans le cas d'une modulation décalée (Fig. 6-C) le retard du pic de corrélation (Fig. 6-D) correspond à l'argument θ non nul de la cible. La transmission du pic de corrélation au circuit 16 revient donc à transmettre l'information θ sous réserve que les conditions de calage précitées du disque soient vérifiées. La figure 6-E montre le signal S3 appliqué aux bobines 15 sous forme de créneaux ou d'une sinusoïde, avec une phase correspondant à l'argument θ.

En conséquence, l'ensemble détecteurs et circuits de traitement n'a plus qu'à fournir les informations de module ρ des cibles détectées, ce paramètre pouvant être considéré indépendant pratiquement du roulis présenté par le corps du missile.

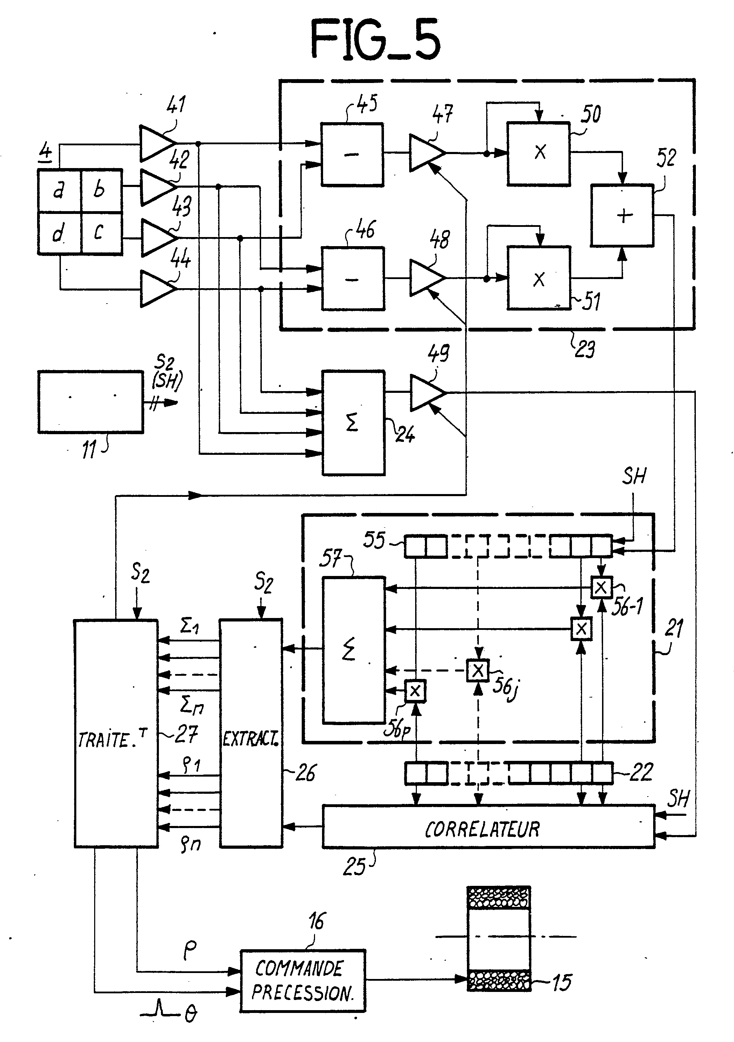

La figure 5 représente un mode de réalisation correspondant dans le cas envisagé d'un détecteur 4 à quatre quadrants. La partie électronique comporte à la suite du détecteur des préamplificateurs faible bruit 41 à 44 connectés chacun à un élément détecteur respectivement. Les quatres voies de détection ainsi produites sont appliquées à un sommateur 24 qui constitue la voie somme pour obtenir a + b + c + d et sont appliquées au circuit d'entrée 23 (Fig. 1) qui comporte deux voies différences ou circuits soustracteurs 45 et 46 pour obtenir les paramètres A = a — c et B = b — d respectivement. Les deux voies différence et la voie somme comportent ensuite des amplificateurs à gain variable 47, 48, 49 commandés par un circuit de commande automatique de gain élaborée en 27 selon des techniques connues. La voie somme en sortie du circuit 49 est transmise au corrélateur 25. Les deux voies différence sont appliquées à deux circuits multiplicateurs 50 et 51 suivis d'un circuit sommateur 52 pour produire le terme A² + B². La sortie du sommateur est appliquée au corrélateur 21. Ce dernier comporte à l'entrée un registre à décalage 55 pour recevoir les moments successifs du code de modulation détecté. A cet effet le registre est synchronisé par un signal d'horloge SH correspondant à la cadence de bit du code. La période de ce signal correspond à celle de rotation divisée par le nombre de moments contenus dans le code. Ce signal S H peut être élaboré par l'ensemble de synchronisation 11. De manière préférentielle ce signal S H sera lui-même un multiple de la période de bit du code de manière à pouvoir explorer avec une grande finesse l'intervalle temporel correspondant à la formation du pic de corrélation, intervalle de largeur correspondant à deux bits du code. Le circuit 22 est tout simplement constitué par une mémoire, tel un registre dont les étages comportent l'information 1 ou 0 correspondante du code et dont le nombre d'étages correspond au nombre de moments du code. Les registres 55 et 22 sont corrélés étage par étage successivement au moyen de circuits multiplicateurs 56.1 à 56.p, p étant le nombre de moments du code. De préférence, un bit 0 sera remplacé par la valeur — 1 au niveau des multiplicateurs. Les sorties de ces circuits multiplicateurs sont appliquées à un circuit sommateur 57 qui délivre la somme, c'est-à-dire le résultat de corrélation. On se rend bien compte qu'au moment de la coïncidence entre le code inscrit dans le registre 55 et qui défile continûment et celui stocké de manière fixe en 22 apparaîtra le pic de corrélation qui est transmis au circuit 26. Le deuxième circuit corrélateur 25 est analogue au circuit 21 et reçoit de même le code de référence et un signal d'horloge S H approprié.

Le circuit d'extraction 26 n'est pas détaillé, il est considéré réalisé selon des techniques connues, l'extraction pouvant se faire en procédant à des sélections en fonction du niveau moyen et en recherchant le signal de niveau le plus élevé. Dans le cas de plusieurs cibles détectées, ayant généralement des arguments différents, l'exploration complète de la fonction de corrélation constituée par p moments va mettre en évidence ensuite plusieurs pics de corrélation correspondants qui seront extraits par le circuit 26 par comparaison, sélection de niveau, et tout critère dynamique utile.

Le circuit 27 comporte avantageusement des circuits microprocesseurs programmés de manière à faire des prédictions c'est-à-dire, calculer d'après la position du pic au cours de plusieurs périodes de rotation quelle va être la position suivante de ce pic et donc de la cible, et à partir de données de ce genre de créer des fenêtres temporelles suivant lesquelles on peut définir quelle est la cible utile qui doit être sélectionnée. Le module ρ et la phase θ correspondante du pic de corrélation sont transmis au circuit de commande 16 des bobines de précession 15.

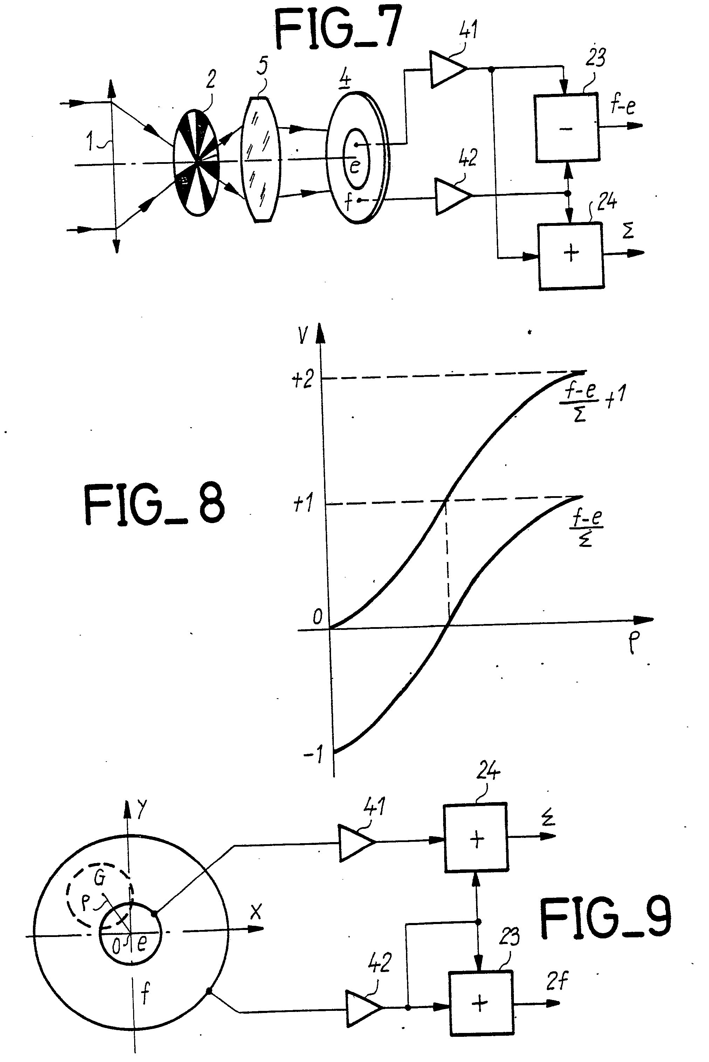

La figure 7 représente un schéma partiel relatif à un autre mode de réalisation du système dans lequel le détecteur ne comporte que deux éléments, un premier élément circulaire « e » centré sur l'axe optique Z et un deuxième élément annulaire « f » formant une couronne autour du précédent. On a ainsi seulement deux voies de détection et le circuit d'entrée 23 se résume à un circuit soustracteur pour faire la différence (f — e) qui est caractéristique de la position du centre g de la cible dans le plan de détection (voir détail sur Fig. 9). Cette valeur de (f — e) qui correspond au module ρ du point G est ensuite traitée par corrélation et extraction de pic comme précédemment. La valeur est normée par division par la somme Σ afin de s'affranchir des niveaux optiques reçus. La courbe d'écartométrie obtenue pour le calcul (f — e)/Σ est centrée sur la valeur 0 comme le montre la figure 8 lorsque l'on fait varier le paramètre ρ. On produit alors une translation de cette courbe d'une valeur approximative égale à + 1 pour obtenir la courbe [(f — e)/Σ] + 1. Lors de la présence de deux ou plusieurs cibles ce calcul est effectué dans le circuit 27 pour chacun des pics de corrélation obtenus sur la voie somme. En remarquant que la valeur du module augmenté d'une unité comme il a été dit précédemment peut également s'écrire 2 f/Σ, le schéma de la figure 7 peut être modifié comme indiqué sur la figure 9 en remplaçant le circuit d'entrée 23 soustracteur par un circuit sommateur.

Cette solution à détecteurs concentriques permet une réalisation plus simple des circuits d'entrée en aval mais la réalisation du dispositif détecteur n'est pas toujours aisée pour une réalisation pouvant convenir dans les divers domaines infrarouges exploités. Pour cette raison on a présenté des réalisations à deux et à quatre éléments, étant entendu que d'autres modèles de détecteurs peuvent être utilisés.

Dans ce qui précède on a considéré le détecteur porté par le montage cardan ainsi que l'optique intermédiaire. Il y a lieu de considérer qu'on peut envisager aussi des solutions où ces sous-ensembles sont fixes, solidaires du corps de missile, ce qui peut être avantageux dans le cas de détecteurs refroidis. On pourra se rapporter par exemple au document de brevet français 2 492 516 qui décrit des moyens de déport d'image permettant de maintenir invariable la position du centre de l'image dans le plan détecteur en présence des rotations en site et en gisement du cardan, les moyens de déport d'image étant constitués à l'aide de miroirs plans ou de montage équivalent à prismes, ou encore, avec des faisceaux de fibres optiques ordonnées.

Le système présente de multiples variantes. Au niveau par exemple de la grille codée décrite et considérée formée de secteurs opaques et transparents alternés, on peut considérer que le dessin de cette grille n'est pas effectué par des rayons rectilignes. On peut utiliser selon des techniques connues, un dessin suivant lequel on forme des chevrons ou encore, des limites de zone non rectilignes mais courbes formées de portions de spirales par exemple. Ces différentes formes ont pour but l'amélioration du filtrage spatial avec une meilleure rejection du fond ambiant et une meilleure adaptation à l'utilisation opérationnelle. On peut également dans le cas d'autres applications, autodirecteurs ou non, considérer que les moyens d'entraînement ne sont pas constitués par une toupie de gyroscope mais que le système est porté par une plate-forme stabilisée et qu'il y a des circuits d'asservissement correspondants.

**Revendications**

1. Système de détection optoélectrique et de localisation angulaire de sources lumineuses, comportant successivement : une optique réceptrice (1) pour focaliser le rayonnement utile provenant du champ observé, un disque (2) tournant autour de l'axe optique de l'optique réceptrice, positionné dans le plan focal et portant des grilles formées de secteurs transparents et opaques alternés produisant une modulation déterminée, une optique intermédiaire (5) de transposition d'image, un dispositif photodétecteur (4) à N éléments avec N ≥ 2 définissant N voies de réception et des circuits de traitement et d'écartométrie (20) reliés aux N voies de réception pour démoduler les signaux issus de ces voies et élaborer les signaux d'écartométrie représentatifs du dépointage angulaire d'une source détectée par rapport à l'axe optique de visée, et un dispositif gyroscopique (6, 7, 8, 9) avec suspension à la cardan pour supporter les optiques réceptrice et intermédiaire, et stabiliser l'axe de visée et entraîner en rotation le disque, le système étant caractérisé en ce que les secteurs sont agencés pour produire une modulation correspondant à un code identifiable par corrélation, les circuits de traitement (20) comportant, un circuit d'entrée (23) qui produit à partir des N voies de réception un signal indépendant du roulis correspondant au module ρ du signal d'écartométrie de chaque source détectée, un premier circuit corrélateur (21) pour corréler ce signal module avec une réplique dudit code (SR) de phase temporelle déterminée, une voie somme (24) pour additionner les signaux des N voies de réception puis corréler la somme dans un deuxième corrélateur (25) avec ladite réplique, les sorties des corrélateurs étant transmises à un circuit d'extraction (26) des pics de corrélation des sources détectées dans ledit champ, ce circuit étant suivi d'une unité de traitement (27) pour sélectionner le pic correspondant à la source utile, déterminer le module ρ et l'argument θ du signal d'écartométrie de ladite source et pour alimenter un circuit d'asservissement (16, 15) de la position de l'axe de visée par ledit signal d'écartométrie en coordonnées polaires ρ, θ la valeur d'argument θ étant donnée directement par le pic de corrélation moyennant un calage initial du disque autour de l'axe optique.

2. Système selon la revendication 1, caractérisé en ce que le dispositif détecteur (4) est du type à quatre quadrants (N = 4).

3. Système selon la revendication 2, caractérisé en ce que le circuit d'entrée comporte deux circuits soustracteurs (45, 46) alimentés chacun par deux voies de réception, chaque soustracteur étant connecté en série avec un circuit multiplicateur (50, 51) pour élévation au carré du signal de sortie, puis un circuit d'addition (52) qui reçoit les sorties des multiplicateurs et délivre un signal correspondant du carré du module ρ.

4. Système selon la revendication 1, caractérisé en ce que le dispositif détecteur (4) comporte deux éléments détecteurs (N = 2), un premier élément circulaire et un deuxième élément annulaire, concentrique avec le premier élément.

5. Système selon la revendication 4, caractérisé en ce que le circuit d'entrée comporte un circuit soustracteur (23) pour faire la différence (f — e) des signaux détectés par les deux éléments, cette différence étant pondérée par la valeur somme après corrélations correspondantes et accrue d'une unité dans le circuit d'extraction (26).

6. Système selon la revendication 4, caractérisé en ce que le circuit d'entrée comporte un circuit d'addition (23) pour doubler le signal détecté par l'élément annulaire, ce signal doublé étant pondéré ensuite après corrélations par la valeur somme dans le circuit d'extraction (26).

7. Système selon l'une quelconque des revendications 1 à 6, caractérisé en ce que le circuit d'asservissement comporte un circuit de commande (16) qui alimente des bobines de précession (15) à partir de l'information d'amplitude du pic de corrélation sélectionné, cette information correspondant au module ρ du signal d'écartométrie de la source correspondante, et à partir de l'information de position temporelle dudit pic, cette information correspondant à l'argument θ du signal d'écartométrie de cette source.

8. Système selon l'une quelconque des revendications 1 à 7, caractérisé en ce que les secteurs (2) transparents et opaques sont délimités de façon non rectiligne pour former des chevrons, ou des portions de spirale.

9. Système selon l'une quelconque des revendications 1 à 8, caractérisé en ce que les grilles (2) de modulation traduisent un code pseudo-aléatoire, le photo-détecteur (4) étant porté par la suspension cardan (7) ou en dehors de cette suspension moyennant adjonction de moyens de déport d'image pour maintenir l'image centrée dans le plan de détection.

10. Utilisation d'un système selon l'une quelconque des revendications 1 à 9 pour réaliser un autodirecteur infrarouge passif équipant des missiles sol-air ou air-air.

**Claims**

1. An optoelectrical detection and angular localization system for luminous sources, comprising successively : a receiving optical means (1) in order to focus the significant radiation from the observed field, a disk (2) rotating about the optic axis of the receiving optical means, positioned in the focal plane and carrying grids formed by alternating transparent and opaque sectors producing a determined modulation, an intermediate optical means (5) for the transposition of the image, a photodetector device (4) with N elements such that N ≥ 2 defining N reception paths, and treatment and directional error circuits (20) connected with the N reception paths in order to demodulate the signals from these paths and to produce directional error signals representative of the angular misalignment of a detected source in relation to the optical aiming axis, and a gyroscopic device (6, 7, 8 and 9) with a gimbal suspension for supporting the receiving optical means and the intermediate optical means and to stabilize the aiming axis and rotate the disk, such system being characterized in that the sectors are driven to produce a modulation corresponding to a code which may be identified by correlation, the treating circuits (20) comprising an input circuit (23) which from the N receiving paths produces a signal independent of the rolling motion corresponding to the module of the directional error signal from each detected source, a first correlating circuit (21) to correlate this module signal with a replica of the said code (SR) of the time phase determined, a sum path (24) to add the signals of the N receiving paths and then to correlate the sum in a second correlating means (25) with the said replica, the outputs of the correlating means being transmitted to an extraction circuit (26) for the peaks of correlation of the sources detected in the field, this circuit being followed by a treating unit (27) to select the peak corresponding to the significant source, to determine the module ρ and the argument θ of the signal of the directional error of the said source and to feed a servocontrol circuit (16 and 15) for controlling the position of the aiming axis by said directional error signal in the form of polar coordinates (p, θ), the value of the argument (θ) being given directly by the correlation peak by means of an initial clamping of the disk around the optic axis.

2. The system as claimed in claim 1 characterized in that the detecting device (4) is of the four quadrant type (N = 4).

3. The system as claimed in claim 2, characterized in that the input circuit comprises two subtracting circuits (45 and 46) each fed by two receiving paths, each subtracter being connected in series with a multiplying circuit (50 and 51) for elevation to the square of the output signal, then an adding circuit (52) which receives the outputs of the multipliers and supplies a signal corresponding of the square of the module ρ.

4. The system as claimed in claim 1 characterized in that the detecting device (4) comprises two detecting elements (N = 2), a first circular element and a second annular element concentric to the first element.

5. The system as claimed in claim 4, characterized in that the input circuit comprises a subtracting circuit (23) to derive the difference (f — e) between the signals detected by these two elements, said difference being weighted by the sum value after corresponding correlations and incremented by one unit in the extraction circuit (26).

6. The system as claimed in claim 4, characterized in that the input circuit comprises and addition circuit (23) to double the signal detected by the annular element, said doubled signal being then weighted after correlations by the sum value in the extraction circuit (26).

7. The system as claimed in any one of the claims 1 through 6, characterized in that the servocontrol circuit comprises a control circuit (16) which feeds the precession coils (15) on the basis of the amplitude information of the peak of the selected correlation, said information corresponding to the module ρ of the directional error signal of the corresponding source, and on the basis of the information concerning the time position of the said peak, said information corresponding to the argument θ of the directional error signal of this source.

8. The system as claimed in any one of the claims 1 through 7, characterized in that the transparent and opaque sectors (2) are demarcated in a non-rectilinear manner in order to form chevrons or portions of a spiral.

9. The system as claimed in any one of the claims 1 through 8, characterized in that the modulation grids (2) translate a pseudo-random code the photodetector (4) being carried by the gimbal suspension (7) or outside thereof by way of the adjunction of image offsetting means in order to maintain the image centered in the detection plane.

10. The utilization of the system as claimed in any one the claims 1 through 9 in order to form an infrared passive autodirecting means for ground to air or air to air missiles.

**Patentansprüche**

1. System zur optoelektrischen Erfassung und Winkelortung von Lichtquellen, welches aufeinanderfolgend aufweist : eine Empfangsoptik (1) zum Fokussieren der Nutzstrahlung, die aus dem beobachteten Feld kommt, eine um die optische Achse der Empfangsoptik rotierende Scheibe (2), die in der Brennebene liegt und Muster trägt, welche aus abwechselnden lichtdurchlässigen und lichtundurchlässigen Sektoren gebildet sind, die eine bestimmte Modulation hervorrufen, eine Zwischenoptik (5) zur Bildumsetzung, eine Fotodetektorvorrichtung (4) mit N Elementen, mit $N \geqslant 2$, zur Bildung von N Empfangswegen, und Verarbeitungs- und Ablagemeßschaltungen (20), welche an die N Empfangswege angeschlossen sind, um die von diesen Wegen abgegebenen Signale zu demodulieren und die Ablagemeßsignale zu erzeugen, welche die Winkelablage einer erfaßten Quelle gegenüber der optischen Visierachse darstellen, und eine Kreiselvorrichtung (6, 7, 8, 9) mit Cardan-Aufhängung, zur Lagerung der Empfangs- und der Zwischenoptik, Stabilisierung der Visierachse und für den Drehantrieb der Scheibe, wobei das System dadurch gekennzeichnet ist, daß die Sektoren so angeordnet sind, daß sie eine Modulation hervorrufen, die einem Code entspricht, welcher durch Korrelation identifiziert werden kann, wobei die Verarbeitungsschaltungen (20) versehen sind mit einer Eingangsschaltung (23), welche aus den N Empfangswegen ein Signal erzeugt, das unabhängig von dem Rollwinkel ist, welcher dem Betrag des Ablagemeßsignals jeder erfaßten Quelle entspricht, mit einer ersten Korrelatorschaltung (21) zum Korrelieren dieses Betrag-Signals mit einer Nachbildung des genannten Codes (SR) von bestimmter Zeitphase, mit einem Summenkanal (24) zum Addieren der N Signale der Empfangswege und Korrelieren der Summe mit der genannten Nachbildung in einem zweiten Korrelator (25), wobei die Ausgangssignale dieser Korrelatoren an eine Extraktionsschaltung (26) zum Herauslösen der Korrelationsmaxima der in dem genannten Feld erfaßten Quellen angelegt werden, wobei auf diese Schaltung eine Verarbeitungseinheit (27) folgt, um das der Nutzquelle entsprechende Maximum auszuwählen, den Betrag ρ und das Argument θ des Ablagemeßsignals der Quelle zu bestimmen und eine Regelschaltung (16, 15) anzusteuern, welche die Lage der Visierachse durch das Ablagemeßsignal in Polarkoordinaten ρ, θ nachregelt, wobei der Wert des Argumentes θ direkt durch das Korrelationsmaximum mittels einer Anfangsfestlegung der Scheibe um die optische Achse gegeben ist.

2. System nach Anspruch 1, dadurch gekennzeichnet, daß die Detektorvorrichtung (4) vom Typ mit vier Quadranten (N = 4) ist.

3. System nach Anspruch 2, dadurch gekennzeichnet, daß die Eingangsschaltung zwei Subtrahierschaltungen (45, 46) aufweist, die jeweils durch zwei Empfangswege gespeist werden, wobei jeder Subtrahierer in Reihe mit einer Multiplizierschaltung (50, 51) angeordnet ist, um das Ausgangssignal zu quadrieren, worauf eine Additionsschaltung (52) folgt, die die Ausgangssignale der Multiplikatoren empfängt und ein Signal abgibt, welches dem Quadrat des Betrags ρ entspricht.

4. System nach Anspruch 1, dadurch gekennzeichnet, daß die Detektorvorrichtung (4) zwei Detektorelemente (N = 2) aufweist, nämlich ein erstes, kreisförmiges Element und ein zweites, ringförmiges Element, welches zu dem ersten Element konzentrisch liegt.

5. System nach Anspruch 4, dadurch gekennzeichnet, daß die Eingangsschaltung eine Subtrahierschaltung (23) aufweist, um die Differenz (f — e) der durch die zwei Elemente erfaßten Signale zu bilden, wobei diese Differenz mit dem Summenwert nach entsprechenden Korrelationen gewichtet wird und in der Extraktionsschaltung (26) um eine Einheit vergrößert wird.

6. System nach Anspruch 4, dadurch gekennzeichnet, daß die Eingangsschaltung eine Addierschaltung (23) aufweist, um das durch das Ringelement erfaßte Signal zu verdoppeln, wobei dieses verdoppelte Signal anschließend nach Korrelationen mit dem Summenwert in der Extraktionsschaltung (26) gewichtet wird.

7. System nach einem der Ansprüche 1 bis 6, dadurch gekennzeichnet, daß die Regelschaltung eine Steuerschaltung (16) aufweist, welche die Präzessionswicklungen (15) ansteuert, und zwar ausgehend von der Amplitudeninformation des gewählten Korrelationsmaximums, wobei diese Information dem Betrag ρ des Ablagemeßsignals der entsprechenden Quelle entspricht, und von der zeitlichen Positionsinformation dieses Maximums, wobei diese Information dem Argument θ des Ablagemeßsignals dieser Quelle entspricht.

8. System nach einem der Ansprüche 1 bis 7, dadurch gekennzeichnet, daß die lichtdurchlässigen und lichtundurchlässigen Sektoren (2) in nicht geradliniger Weise begrenzt sind, um Zickzacklinien oder Spiralenteile zu bilden.

9. System nach einem der Ansprüche 1 bis 8, dadurch gekennzeichnet, daß die Modulationsmuster (2) einen pseudozufälligen Code wiedergeben, wobei der Fotodetektor (4) durch die Cardan-Aufhängung (7) getragen wird oder außer-halb dieser Aufhängung durch Bildversetzungs-mittel gelagert ist, um das Bild in der Erfassungsebene zentriert zu halten.

10. Verwendung eines Systems nach einem der Ansprüche 1 bis 9 zur Verwirklichung eines passiven Infrarot-Zielsuchgeräts, mit welchem Boden-Luft- oder Luft-Luft-Flugkörper ausgestattet sind.

# FIG_1

# FIG_6

# FIG_2

# FIG_3

# FIG_4

FIG_5

0 169 128

# FIG_7

# FIG_8

# FIG_9